# EUROPÄISCHE PATENTSCHRIFT

(11) **EP 3 812 748 B1**
(45) Veröffentlichungstag und Bekanntmachung des Hinweises auf die Patenterteilung: **01.10.2025**
(21) Anmeldenummer: 20191033.8
(22) Anmeldetag: 14.08.2020
(51) Int. Cl.: G01N 21/90, G01N 21/93, G01N 21/88

(54) **VERFAHREN UND VORRICHTUNG ZUR OPTISCHEN INSPEKTION VON BEHÄLTERN**
DEVICE AND METHOD FOR OPTICAL INSPECTION OF CONTAINERS
PROCÉDÉ ET DISPOSITIF D'INSPECTION OPTIQUE DE RÉCIPIENTS

(30) Priorität: 22.10.2019 DE 102019128503
(43) Veröffentlichungstag der Anmeldung: 28.04.2021
(73) Patentinhaber: Krones AG, 93073 Neutraubling (DE)
(72) Erfinder: HEWICKER, Alexander, 93073 Neutraubling (DE)
(74) Vertreter: Grünecker Patent- und Rechtsanwälte PartG mbB

(56) Entgegenhaltungen:
- DE-A1- 10 065 321
- DE-A1- 19 646 678
- DE-A1- 19 646 694
- US-A- 5 436 979
- US-A- 6 035 072
- US-A1- 2005 068 449
- US-A1- 2007 189 757
- US-A1- 2013 076 892

## Beschreibung

Die Erfindung betrifft ein Verfahren und eine Vorrichtung zur optischen Inspektion von Behältern mit den Merkmalen des Oberbegriffs von Anspruch 1 bzw. 12.

Üblicherweise werden derartige Verfahren und Vorrichtungen dazu eingesetzt, die Behälter auf Verschmutzungen und/oder Defekte hin zu inspizieren. Dazu werden die Behälter mit einem Transporteur als Behältermassenstrom zu einer optischen Inspektionseinheit transportiert, die beispielsweise eine Beleuchtungseinrichtung und eine Kamera umfasst, sodass die Behälter im Durchlicht und/oder im Auflicht inspiziert werden können. Denkbar sind jedoch auch jegliche andere optischen Anordnungen, mit denen die Behälter bildhaft erfasst werden können. Mit der optischen Inspektionseinheit werden die Behälter jeweils als Bilddaten erfasst, die anschließend mit einer Bildverarbeitungseinheit auf die Verschmutzung und/oder die Defekte an dem jeweiligen Behälter hin ausgewertet werden. Wird nun eine Verschmutzung und/oder ein Defekt an einem Behälter erkannt, so wird dieser beispielsweise emeut gereinigt oder recycelt.

Beispielsweise kommen derartige Verfahren und Vorrichtungen bei der Seitenwand-, Boden- und/oder Füllhöheninspektion von Leerbehältern oder bereits mit einem Produkt befüllten Behältern zum Einsatz.

Es kann dabei in seltenen Fällen vorkommen, dass im Strahlengang der optischen Inspektionseinheit Verschmutzungsstellen vorhanden sind, die dann von der Bildverarbeitungseinheit als Verschmutzung und/oder Defekte an einem oder mehreren fehlerfreien Behältern erkannt werden und dazu führen, dass sie als fehlerhaft klassifiziert und dann unbeabsichtigt aus dem Behältermassenstrom ausgeschleust werden. Dies kann beispielsweise von einer automatischen Überwachungseinheit oder von einem Bediener erkannt werden, sodass dann eine Reinigung der optischen Inspektionseinheit veranlasst wird.

Nachteilig dabei ist, dass solche Verschmutzungen des optischen Aufbaus nur erkannt werden, wenn sie zu mehreren, aufeinanderfolgenden schlechten Inspektionsergebnissen führen oder eine Fehlausleitrate deutlich erhöht ist. Eine nur leichte Verschmutzung, die nicht zu unmittelbar aufeinanderfolgenden schlechten Inspektionsergebnissen führt, wird folglich auf diese Art und Weise oftmals nicht erkannt. Dies kann dann zu einer sporadischen Fehlausleitung führen, die unerkannt bleibt.

Eine Inspektionsvorrichtung mit wenigstens einer Kamera zum Inspizieren von Gegenständen, insbesondere Behältern, wie Flaschen, Dosen oder dergleichen, und mit einer Bildauswerteeinrichtung ist aus der DE 20 2004 007783 A1 bekannt.

Die DE 196 46 678 A1 offenbart ein Verfahren zum Testen der Zuverlässigkeit eines Prüfgeräts, insbesondere eines Leerflascheninspektors.

Die US 6,035,072 offenbart ein Verfahren zur Kartierung von Defekten oder Verschmutzungen, die dynamisch auf ein Bilderfassungsgerät einwirken.

Aufgabe der vorliegenden Erfindung ist es daher, ein Verfahren und eine Vorrichtung zur optischen Inspektion von Behältern bereitzustellen, mit denen zuverlässiger erkannt werden kann, ob Verschmutzungsstellen im Strahlengang der optischen Inspektionseinheit vorhanden sind.

Zur Lösung der Aufgabenstellung stellt die Erfindung ein Verfahren zur optischen Inspektion von Behältern mit den Merkmalen des Anspruchs 1 bereit. Vorteilhafte Ausführungsformen der Erfindung sind in den Unteransprüchen genannt.

Bei umfangreichen Untersuchungen der Anmelderin hat sich herausgestellt, dass die Verschmutzungsstellen im Strahlengang der optischen Inspektionseinheit immer an ähnlichen Orten in den Bilddaten mehrerer verschiedener Behälter abgebildet werden. Dadurch, dass die ersten Bilddaten der mehreren Behälter überlagert werden, wird das Bildsignal der Verschmutzungsstellen im Überlagerungsbild verstärkt. Demgegenüber werden darin die Verschmutzungen und/oder Defekte an den jeweiligen Behältern abgeschwächt, da sie üblicherweise an verschiedenen Stellen in den Bilddaten abgebildet werden. Selbst bei der Überlagerung von wenigen Bilddaten können die Verschmutzungsstellen beispielsweise als abgedunkelter Bereich im Überlagerungsbild erkannt werden. Dadurch, dass das Überlagerungsbild auf das Vorhandensein der Verschmutzungsstellen in dem Strahlengang der optischen Inspektionseinheit hin ausgewertet wird, können diese besonders zuverlässig erkannt werden und es können daraufhin geeignete Maßnahmen ausgelöst werden. Beispielsweise kann frühzeitig eine Bedienperson gewarnt werden, so dass sie die optische Inspektionseinheit reinigt. Mit dem Verfahren können bereits leichte Verschmutzungsstellen erkannt werden, so dass geeignete Maßnahmen besonders frühzeitig eingeleitet werden können und der reguläre Betrieb dazu nicht notwendigerweise unterbrochen werden muss. Beispielsweise kann eine Reinigung während einer Umrüstung einer der optischen Inspektionseinheit zugeordneten Behälterbehandlungsmaschine geschehen.

Das Verfahren zur optischen Inspektion kann in einer Getränkeverarbeitungsanlage eingesetzt werden. Das Verfahren kann einem Behälterherstellungsverfahren, Reinigungsverfahren, Füll- und/oder Verschlussverfahren vorgeordnet oder nachgeordnet sein. Das Verfahren kann in einer Vollflaschen- oder Leerflascheninspektionsmaschine eingesetzt werden, die die optische Inspektionseinheit umfasst. Beispielsweise kann das Verfahren zur Inspektion von zurückgenommenen Mehrwegbehältern eingesetzt werden.

Die Behälter können dazu vorgesehen sein, Getränke, Nahrungsmittel, Hygieneartikel, Pasten, chemische, biologische und/oder pharmazeutische Produkte aufzunehmen. Die Behälter können als Flaschen, insbesondere als Kunststoffflaschen oder Glasflaschen ausgebildet sein. Bei Kunststoffflaschen kann es sich im speziellen um PET-, PEN-, HD-PE oder PP-Flaschen handeln. Denkbar ist auch, dass es sich bei den Behältern um Vorformlinge zur Herstellung der Kunststoffflaschen handelt. Ebenso kann es sich um biologisch abbaubare Behälter oder Flaschen handeln, deren Hauptbestandteile aus nachwachsenden Rohstoffen, wie zum Beispiel Zuckerrohr, Weizen oder Mais bestehen. Die Behälter können mit einem Verschluss versehen sein, beispielsweise mit einem Kronkorken, Schraubverschluss, Abreißverschluss oder dergleichen. Ebenso können die Behälter als Leergut vorzugsweise ohne Verschluss vorliegen.

Denkbar ist, dass das Verfahren zur Seitenwand-, Boden-, Mündungs- und/oder Inhaltskontrolle der Behälter eingesetzt wird. Bei den Verschmutzungen kann es sich um Fremdkörper, Produktreste, Reste von Etiketten und/oder dergleichen handeln. Bei den Defekten kann es sich beispielsweise um Beschädigungen an den Behältern, beispielsweise abgeplatztes Glas handeln. Ebenso ist denkbar, dass es sich um fehlerhaft produzierte Materialstellen, wie beispielsweise lokale Materialverdünnungen und/oder -verdickungen handelt.

Die Behälter können mit dem Transporteur zu der optischen Inspektionseinheit als der Behältermassenstrom transportiert werden, vorzugsweise als einbahniger Behältermassenstrom. Der Transporteur kann ein Karussell und/oder einen Lineartransporteur umfassen. Denkbar ist beispielsweise, dass der Transporteur ein Förderband umfasst, auf dem die Behälter stehend in einem Inspektionsbereich der optischen Inspektionseinheit transportiert werden. Denkbar sind auch Aufnahmeelemente, die ein oder mehrere Behälter während des Transports aufnehmen. Der Behälter kann auch durch seitliche Riemen gehalten transportiert werden, wenn zum Beispiel die Beleuchtung den Behälterboden durchleuchtet und die Kamera durch die Behältermündung den Boden inspiziert.

Die optische Inspektionseinheit kann eine Beleuchtungseinrichtung und eine Kamera umfassen. Bei der Beleuchtungseinrichtung kann das Licht mit wenigstens einer Lichtquelle erzeugt werden, beispielsweise mit einer Glühbirne, einer Leuchtstoffröhre und/oder mit wenigstens einer LED. Vorzugsweise kann das Licht mit einer Matrix aus LEDs erzeugt und in Richtung der Lichtaustrittsfläche abgestrahlt werden. Die Lichtaustrittsfläche kann größer ausgebildet sein, als die Kameraansicht des Behälters. Ebenso ist denkbar, dass die Lichtaustrittsfläche lediglich einen Teil der Kameraansicht des Behälters beleuchtet. Die Lichtaustrittsfläche kann das Licht teilweise oder vollständig diffus abstrahlen. Vorzugsweise kann die Lichtaustrittsfläche eine Streuscheibe umfassen, mit der das Licht von der wenigstens einen Lichtquelle zur Kamera hin flächig diffus gestreut wird.

Die Kamera kann jeweils einen Teilbereich eines Behälters, genau einen Behälter oder mehrere Behälter und das darüber transmittierte oder reflektierte Licht mit einem Objektiv und mit einem Bildsensor erfassen. Der Bildsensor kann beispielsweise ein CMOS oder ein CCD-Sensor sein. Denkbar ist, dass die Kamera die Bilddaten, insbesondere die ersten Bilddaten oder den zweiten Bilddaten, mit einer Datenschnittstelle zur Bildverarbeitungseinheit hin überträgt. Denkbar ist, dass das Licht von der Beleuchtungseinrichtung erzeugt wird, anschließend die Behälter durchleuchtet und/oder davon reflektiert und dann von der Kamera erfasst wird.

Mit "Bilddaten" kann hier wenigstens ein Kamerabild eines oder mehrerer der Behälter gemeint sein. Beispielsweise können die Behälter jeweils in den ersten und/oder zweiten Bilddaten aus einer oder mehreren Bildperspektiven erfasst werden. Die Kamera kann für jeden Bildpunkt der Bilddaten die Polarisationseigenschaft, die Intensitätseigenschaft, die Farbeigenschaft und/oder die Phaseneigenschaft des Lichts erfassen.

Die Bildverarbeitungseinheit kann die Bilddaten, insbesondere die ersten und/oder zweiten Bilddaten mit einem Signalprozessor und/oder mit einer CPU (Central Processing Unit) und/oder GPU (Graphics Processing Unit) und/oder mit einer TPU (Tensor Processing Unit) und/oder mit einer VPU (Vision Processing Unit) verarbeiten. Denkbar ist auch, dass die Bildverarbeitungseinheit eine Speichereinheit, eine oder mehrere Datenschnittstellen, beispielsweise eine Netzwerkschnittstelle, eine Anzeigeeinheit und/oder eine Eingabeeinheit umfasst. Denkbar ist auch, dass die Bildverarbeitungseinheit das wenigstens eine Kamerabild mit Bildverarbeitungsalgorithmen auswertet, die als Computerprogrammprodukt in der Speichereinheit vorhanden sind.

Dass die ersten Bilddaten der mehreren Behälter zu dem Überlagerungsbild überlagert werden, kann hier bedeuten, dass die ersten Bilddaten mehrerer Behälter aufsummiert werden. Optional können dabei die ersten Bilddaten der mehreren Behälter jeweils mit einem Gewichtungsfaktor gewichtet werden. Mit "aufsummieren" kann hier gemeint sein, dass jeweils die gleichen Bildpunkte der ersten Bilddaten mehrerer Behälter aufsummiert werden.

"Dass das Überlagerungsbild auf das Vorhandensein der Verschmutzungsstellen in dem Strahlengang der optischen Inspektionseinheit hin ausgewertet wird" kann hier bedeuten, dass mittels der Bildverarbeitungseinheit eine lokale Veränderung in dem Überlagerungsbild erkannt wird, beispielsweise ein Abdunkeln durch die Verschmutzungsstellen.

Ein weiterer Behälter kann mit der optischen Inspektionseinheit als zweite Bilddaten erfasst werden, wobei das Überlagerungsbild mit einem ersten Gewichtungsfaktor und die zweiten Bilddaten mit einem zweiten Gewichtungsfaktor multipliziert und dann zu einem weiteren Überlagerungsbild überlagert werden, und wobei das weitere Überlagerungsbild auf das Vorhandensein von Verschmutzungsstellen in dem Strahlengang der optischen Inspektionseinheit hin ausgewertet wird. Anschließend kann das weitere Überlagerungsbild das (bisherige) Überlagerungsbild ersetzen und der zuvor beschriebenen Verfahrensschritt kann iterativ mit einem wiederum weitern Behälter durchgeführt werden. Dadurch müssen lediglich das Überlagerungsbild und die zweiten Bilddaten des jeweils zuletzt inspizierten Behälters in einer Speichereinheit der Bildverarbeitungseinheit gehalten werden, um das weitere Überlagerungsbild zu berechnen. Die ersten Bilddaten der zuvor erfassten mehreren Behälter können dadurch gelöscht werden und verbrauchen folglich keinen Speicherplatz. Es müssen also nicht die ersten Bilddaten einer großen Vielzahl von Behältern, beispielsweise 10, 100 oder noch mehr Sätze der ersten Bilddaten im Speicher gehalten werden, um fortwährend ein aktuelleres Überlagerungsbild zu bestimmen. Die zweiten Bilddaten und die ersten Bilddaten können strukturell identisch aufgebaut sein und sich lediglich dadurch unterscheiden, dass die mehreren Behälter jeweils als die ersten Bilddaten und der weitere Behälter als die zweiten Bilddaten erfasst wurden. Anders ausgedrückt, können sich die ersten Bilddaten und die zweiten Bilddaten lediglich dadurch entscheiden, dass sie von unterschiedlichen Behältern erfasst wurden.

Der Betrag des ersten Gewichtungsfaktors kann größer sein, als der Betrag des zweiten Gewichtungsfaktors. Dadurch, dass das Überlagerungsbild bereits aus mehreren Behältern überlagert ist, kann so das Überlagerungsbild stärker gewichtet werden als die zweiten Bilddaten des weiteren Behälters. Denkbar ist, dass sowohl der erste Gewichtungsfaktor als auch der zweite Gewichtungsfaktor positiv sind oder, dass sowohl der erste Gewichtungsfaktor als auch der zweite Gewichtungsfaktor negativ sind. Beispielsweise kann der erste Gewichtungsfaktor proportional zu der Anzahl der mehren Behälter und der zweite Gewichtungsfaktor entsprechend proportional zu genau einem Behälter sein (also zu dem einen weiteren Behälter). Dadurch werden sowohl das Überlagerungsbild als auch die zweiten Bilddaten entsprechend der Anzahl der jeweils dafür inspizierten Behälter gewichtet.

Der erste Gewichtungsfaktor und der zweite Gewichtungsfaktor können in einem Bereich zwischen 0 und 1 liegen, wobei sich der erste Gewichtungsfaktor und der zweite Gewichtungsfaktor zu 1 addieren. Dadurch weist das weitere Überlagerungsbild einen ähnlichen Wertebereich auf, wie das (bisherige) Überlagerungsbild und die zweiten Bilddaten.

Anders ausgedrückt, kann sich der erste Gewichtungsfaktor aus der Anzahl der mehren Behälter dividiert durch die um 1 erhöhte Anzahl der mehren Behälter berechnen, wobei sich der zweite Gewichtungsfaktor aus 1 dividiert durch die um 1 erhöhte Anzahl der mehren Behälter berechnet. Dadurch können die Gewichtungsfaktoren besonders einfach bestimmt werden.

Die ersten Bilddaten, das Überlagerungsbild, die zweiten Bilddaten und/oder das weitere Überlagerungsbild können jeweils bildweise auf denselben Wertebereich normiert werden, insbesondere auf einen Wertebereich von 0 bis 255 oder von 0 bis 65535. Dadurch kann die Auswertung der genannten Bilddaten bzw. der Überlagerungsbilder besonders zuverlässig mit denselben Auswerteparametern durchgeführt werden.

Denkbar ist, dass ein weiterer Behälter mit der optischen Inspektionseinheit als zweite Bilddaten erfasst wird, wobei das Überlagerungsbild und/oder das weitere Überlagerungsbild mit einem dritten Gewichtungsfaktor multipliziert und von den zweiten Bilddaten abgezogen wird, um die Verschmutzungsstellen in dem Strahlengang der optischen Inspektionseinheit aus den zweiten Bilddaten herauszurechnen. Dadurch können die zweiten Bilddaten derart bereinigt werden, dass die Verschmutzungsstellen darin nur noch äußerst geringfügig oder gar nicht mehr in Erscheinung treten. Folglich können dadurch die Verschmutzungen und/oder Defekte besonders zuverlässig erkannt werden, obwohl die Verschmutzungsstellen bereits im Strahlengang der optischen Inspektionseinheit vorhanden sind.

Falls in dem Überlagerungsbild oder in dem weiteren Überlagerungsbild Verschmutzungsstellen im Strahlengang der optischen Inspektionseinheit vorhanden sind, kann eine Schwellwertempfindlichkeit zur Auswertung der Verschmutzungen und/oder der Defekte an den Behältern angepasst, insbesondere herabgesetzt werden. Dadurch kommt es zu weniger Fehlausleitungen von Behältern, die tatsächlich keine Verschmutzungen und/oder Defekte aufweisen. Denkbar ist, dass die Schwellwertempfindlichkeit lediglich bereichsweise herabgesetzt wird. Beispielsweise kann die Schwellwertempfindlichkeit lediglich in einem Bildbereich herabgesetzt werden, in dem die Verschmutzungsstellen in den ersten Bilddaten und/oder den zweiten Bilddaten abgebildet werden. Andere Bildbereiche können davon unberührt bleiben. Folglich arbeitet die Erkennung der Verschmutzungen und/oder Defekte in den Bildbereichen ohne die Verschmutzungsstellen noch zuverlässiger.

Fehlerhafte Behälter können nach der Auswertung der Verschmutzungen und/oder der Defekte aus dem Behältermassenstrom ausgeschleust werden. Dadurch können die fehlerhaften Behälter von der Weiterverarbeitung ausgeschlossen und wiederverwertet werden, beispielsweise bevor sie mit einem Produkt befüllt werden.

Vor der Erfassung mit der optischen Inspektionseinheit können Testbilddaten ohne Behälter erfasst werden, wobei die Testbilddaten zu einem Testüberlagerungsbild überlagert werden, das dann auf bereits vorhandene Verschmutzungsstellen in dem Strahlengang der optischen Inspektionseinheit hin ausgewertet wird. Dadurch können die vorhandenen Verschmutzungsstellen bereits vor der eigentlichen Behälterinspektion erkannt werden, so dass auch die Inspektion der ersten Behälter besonders zuverlässig ist. Die Testbilddaten können beispielsweise durch Aufsummieren zu dem Testüberlagerungsbild überlagert werden. Mit "Aufsummieren" kann hier gemeint sein, dass jeweils die gleichen Bildpunkte der Testbilddaten aufsummiert werden. Bei den Testbilddaten kann es sich beispielsweise um 10 - 20 Testbilder ohne Behälter handeln.

Die Behälter können bei der Erfassung mit einer Vielzahl von Lichtquellen der Beleuchtungseinrichtung beleuchtet werden, wobei auf Basis des Überlagerungsbilds wenigstens eine der Lichtquellen aktiviert wird, um die Verschmutzungsstellen einer Bedienperson zur nachfolgenden Reinigung anzuzeigen, und wobei dabei die übrigen Lichtquellen der Beleuchtungseinrichtung deaktiviert sind. Dadurch kann die Bedienperson die Verschmutzungsstellen besonders einfach erkennen und reinigen. Denkbar ist, dass die Vielzahl der Lichtquellen rasterartig angeordnet sind, beispielsweise in einem tetragonalen oder hexagonalen Raster, insbesondere wobei die Lichtquellen als LEDs ausgebildet sind. Vorzugsweise können auf Basis des Überlagerungsbilds die Verschmutzungsstellen den Lichtquellen zugeordnet werden. Beispielsweise können bei einer Kalibrierung die Lichtquellen einzeln aktiviert und jeweils Bilddaten mit der Kamera aufgenommen werden. Dadurch können die Lichtquellen jeweils den entsprechenden Bildpunkten der Bilddaten und damit auch den Bildpunkten des Überlagerungsbilds zugeordnet werden.

Alternativ können die Verschmutzungsstellen der Bedienperson an einem Bildschirm graphisch angezeigt werden, insbesondere das Überlagerungsbild mit Markierungen der Verschmutzungsstellen.

Denkbar ist, dass das Verfahren zur optischen Inspektion ein manuelles oder automatisches Reinigungsverfahren der optischen Inspektionseinheit umfasst, insbesondere der Kamera und/oder der Beleuchtungseinrichtung. Dadurch können die Verschmutzungsstellen von der optischen Inspektionseinheit entfernt werden und die Inspektion der Behälter kann folglich zuverlässiger erfolgen. Bei dem manuellen oder automatischen Reinigungsverfahren kann die Beleuchtungseinrichtung mit einem Reinigungsmittel gereinigt werden, beispielsweise durch Abschwallung mit einem Reinigungsfluid. Vorzugsweise kann der Bedienperson bei Erreichen einer Eingriffsgrenze eine Warnmeldung angezeigt werden, beispielsweise auf einem Bildschirm, mit dem das Reinigungsverfahren ausgelöst wird. Zudem kann der Transporteur und/oder eine zugeordnete Behälterbehandlungsmaschine bei Erreichen der Eingriffsgrenze gestoppt werden. Mit Eingriffsgrenze kann hier ein Verschmutzungsmaß gemeint sein.

Darüber hinaus stellt die Erfindung zur Lösung der Aufgabenstellung eine Vorrichtung zur optischen Inspektion von Behältern mit den Merkmalen des Anspruchs 12 bereit. Vorteilhafte Ausführungsformen der Erfindung sind in den Unteransprüchen genannt.

Dadurch, dass die Bildverarbeitungseinheit dazu ausgebildet ist, die ersten Bilddaten der mehreren Behälter zu dem Überlagerungsbild zu überlagern, wird das Bildsignal der Verschmutzungsstellen im Überlagerungsbild verstärkt. Demgegenüber werden darin die Verschmutzungen und/oder Defekte an den jeweiligen Behältern abgeschwächt, da sie üblicherweise an verschiedenen Stellen in den Bilddaten abgebildet werden. Selbst bei der Überlagerung von wenigen Bilddaten können die Verschmutzungsstellen beispielsweise als abgedunkelter Bereich im Überlagerungsbild erkannt werden. Dadurch, dass die Bildverarbeitungseinheit dazu ausgebildet ist, das Überlagerungsbild auf das Vorhandensein der Verschmutzungsstellen in dem Strahlengang der optischen Inspektionseinheit hin auszuwerten, können diese besonders zuverlässig erkannt werden und es können daraufhin geeignete Maßnahmen ausgelöst werden. Beispielsweise kann frühzeitig eine Bedienperson gewarnt werden, so dass sie die optische Inspektionseinheit reinigt. Mit dem Verfahren können bereits leichte Verschmutzungsstellen erkannt werden, so dass geeignete Maßnahmen besonders frühzeitig eingeleitet werden können und der reguläre Betrieb dazu nicht notwendigerweise unterbrochen werden muss. Beispielsweise kann eine Reinigung während einer Umrüstung einer der optischen Inspektionseinheit zugeordneten Behälterbehandlungsmaschine geschehen.

Die Vorrichtung zur optischen Inspektion von Behältern, insbesondere nach einem der Ansprüche 12 - 14 kann zur Durchführung des zuvor beschriebenen Verfahrens, insbesondere nach einem der Ansprüche 1 - 11 ausgebildet sein. Die Vorrichtung kann die zuvor in Bezug auf das Verfahren beschriebenen Merkmale einzelnen oder in beliebigen Kombinationen sinngemäß umfassen.

Die Vorrichtung zur optischen Inspektion kann in einer Getränkeverarbeitungsanlage angeordnet sein. Die Getränkeverarbeitungsanlage kann Behälterbehandlungsmaschinen umfassen, insbesondere eine Behälterherstellungsmaschine, einen Rinser, einen Füller, einen Verschließer, eine Etikettiermaschine, eine Direktdruckmaschine und/oder eine Verpackungsmaschine. Denkbar ist, dass die Vorrichtung zur optischen Inspektion einer der genannten Behälterbehandlungsmaschinen zugeordnet ist. Denkbar ist beispielsweise, dass mit der Vorrichtung von der Behälterbehandlungsmaschine verarbeitete oder hergestellte Behälter optisch inspiziert werden. Ebenso können damit beispielsweise Vorformlinge für die Behälterherstellungsmaschine optisch inspiziert werden, vorzugsweise bei einer Blasmaschine. Der Transporteur kann eine der genannten Behälterbehandlungsmaschinen mit der Vorrichtung zur optischen Inspektion verbinden und/oder ihr zugeordnet sein. Die Vorrichtung kann dabei zur Vollflaschen- oder Leerflascheninspektion eingesetzt werden. Denkbar ist beispielsweise, dass die Vorrichtung zur optischen Inspektion von zurückgenommenen Mehrwegbehältern ausgebildet ist.

Die Inspektionseinheit kann eine Beleuchtungseinrichtung zu Beleuchtung der Behälter und/oder eine Kamera zur Erfassung der Behälter als Bilddaten umfassen. Mit Bilddaten können hier die ersten bzw. zweiten Bilddaten gemeint sein. Dadurch können die Behälter flächenhaft beleuchtet bzw. erfasst werden, so dass die Verschmutzung und/oder Defekte mittels der Bildverarbeitungseinheit besonders einfach und zuverlässig erkannt werden können. Die Beleuchtungseinrichtung kann dazu ausgebildet sein, Licht flächig von einer ausgedehnten Lichtaustrittsfläche abzustrahlen, insbesondere in Richtung der Kamera. Die optische Inspektionseinheit kann dazu ausgebildet sein, dass der Behälter zwischen der Beleuchtungseinrichtung und der Kamera inspiziert wird. Beispielsweise kann der Transporteur zwischen der Beleuchtungseinrichtung und der Kamera angeordnet sein, um einzelne Behälter des Behältermassenstroms zu inspizieren. Dadurch können die Behälter im Durchlicht inspiziert werden. Denkbar ist auch, dass die Beleuchtungseinrichtung zur Auflichtbeleuchtung ausgebildet ist und das davon ausgehende Licht bei der Inspektion von den Behältern zur Kamera hin reflektiert wird.

Die Vorrichtung kann eine Ausschleuseinrichtung umfassen, um fehlerhafte Behälter nach der Auswertung der Verschmutzungen und/oder Defekte aus dem Behältermassenstrom auszuschleusen. Dadurch können fehlerhafte Behälter besonders einfach der Wiederverwertung zugeführt werden.

Weitere Merkmale und Vorteile der Erfindung werden nachfolgend anhand der in den Figuren dargestellten Ausführungsbeispiele näher erläutert. Dabei zeigt:
- Figur 1: ein erfindungsgemäßes Ausführungsbeispiel einer Vorrichtung zur optischen Inspektion von Behältern in einer perspektivischen Ansicht;
- Figur 2: ein erfindungsgemäßes Ausführungsbeispiel eines erfindungsgemäßen Verfahrens zur optischen Inspektion von Behältern als Flussdiagramm, insbesondere zur Durchführung mit der Vorrichtung aus der Figur 1; und
- Figuren 3A - 3C: Beispiele der ersten Bilddaten, der zweiten Bilddaten, des Überlagerungsbild sowie des weiteren Überlagerungsbild als schematische Bilddarstellungen.

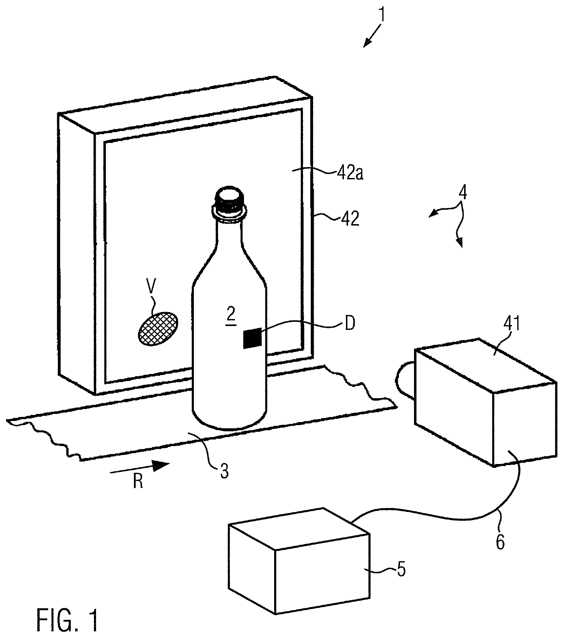

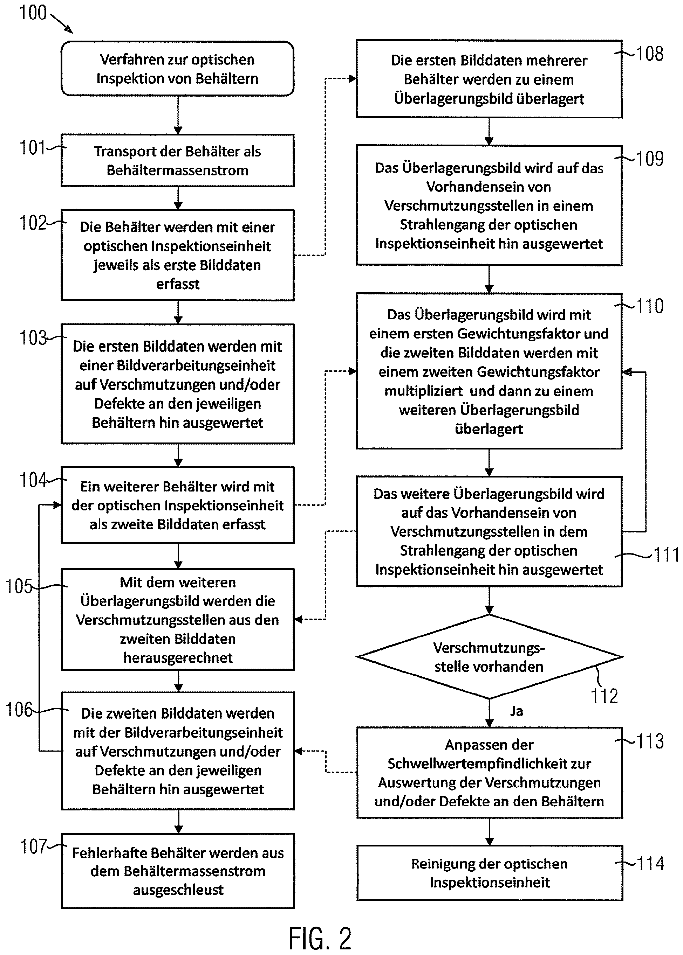

In der Figur 1 ist ein Ausführungsbeispiel einer erfindungsgemäßen Vorrichtung 1 zur optischen Inspektion von Behältern 2 in einer perspektivischen Ansicht genauer dargestellt. Die Vorrichtung wird in Zusammenhang mit dem in der Figur 2 gezeigten, erfindungsgemäßen Ausführungsbeispiel des Verfahrens 100 zur optischen Inspektion von Behältern 2 genauer beschrieben.

In der Figur 1 ist zu sehen, dass die Behälter 2 mit dem Transporteur 3 in der Richtung R als Behältermassenstrom transportiert werden. Der Transporteur 3 ist lediglich beispielhaft als Förderband ausgebildet, auf dem die Behälter 2 stehend transportiert werden. Denkbar sind jedoch auch beliebige andere Arten von Transporteuren, die eine optische Zugänglichkeit der Behälter 2 ermöglichen. Zu sehen ist hier beispielhaft lediglich ein einzelner Behälter 2 des Behältermassenstroms. Es versteht sich, dass auf dem Transporteur 3 mehrere Behälter 2 transportiert werden, insbesondere sequentiell hintereinanderstehend, die den Behältermassenstrom bilden.

Die optische Inspektionseinheit 4 umfasst die Beleuchtungseinrichtung 42 zur Beleuchtung der Behälter 2 und die Kamera 41 zur Erfassung der Behälter 2 als Bilddaten. Die Behälter 2 werden zwischen der Beleuchtungseinrichtung 42 und der Kamera 41 durchleuchtet und dadurch optisch inspiziert. Denkbar ist jedoch auch zusätzlich oder alternativ eine Beleuchtungseinrichtung im Auflicht.

Die Beleuchtungseinrichtung 42 umfasst die flächige Lichtaustrittsfläche 42a, die in der Art einer Leuchtscheibe ausgebildet ist und die das Licht im Wesentlichen homogen und flächig abstrahlt. Denkbar ist jedoch auch jede andere Art der Beleuchtungseinrichtungen 42, die zur Inspektion für die jeweilige Inspektionsaufgabe geeignet ist. Beispielsweise umfasst die Beleuchtungseinrichtung 42 eine Matrix von LEDs, die eine Milchglasscheibe hinterleuchten, wodurch das Licht von der Lichtaustrittsfläche 42a diffus abgestrahlt wird. Auch eine gerichtete Abstrahlung des Lichts ist denkbar.

Des Weiteren ist die Kamera 41 zu sehen, die die Behälter 2 als Bilddaten, insbesondere als Kamerabilder erfasst. Dazu umfasst die Kamera 41 beispielsweise einen CCD- oder CMOS-Sensor und ein Objektiv. Denkbar sind hier sowohl Flächen- als auch Zeilenkameras.

Zudem ist die Bildverarbeitungseinheit 5 zu sehen, die über eine Bilddatenleitung 6 mit der Kamera 41 verbunden ist. Beispielsweise können so die Bilddaten von der Kamera 41 zur Bildverarbeitungseinheit 5 hin als digitale Signale übertragen werden. Denkbar ist auch, dass die Bildverarbeitungseinheit 5 in der Kamera 41 integriert ist. Die Bildverarbeitungseinheit 5 ist dazu ausgebildet, die ersten Bilddaten I1, I2 mehrerer Behälter 2A, 2B zu einem Überlagerungsbild 1 zu überlagern und das Überlagerungsbild U1 auf ein Vorhandensein von Verschmutzungsstellen V in einem Strahlengang der optischen Inspektionseinheit 4 hin auszuwerten.

Weiterhin ist der Defekt D an dem Behälter 2 zu sehen, der zusammen mit dem Behälter 2 in den Bilddaten abgebildet wird. Denkbar ist zusätzlich oder alternativ eine Verschmutzung am Behälter 2. Der Defekt D wird in den Bilddaten als lokal verdunkelter Bereich an dem Behälter 2 erfasst.

Zudem ist die Verschmutzungsstelle V im Strahlengang der optischen Inspektionseinheit 4 zu sehen, die ebenfalls in den Bilddaten hinter dem Behälter 2 als leichte Verdunklung erscheint. Die Verschmutzungsstelle V befindet sich hier lediglich beispielhaft auf der Lichtaustrittsscheibe 42a der Beleuchtungseinrichtung 42. Denkbar ist jedoch auch, dass sich die Verschmutzungsstelle V an dem Objektiv der Kamera 41 oder an einem anderen optischen Element befindet. Beispielsweise an einer Schutzscheibe oder an einem Spiegel eines Spiegelkabinetts.

Die Vorrichtung aus der Figur 1 wird gemäß dem Verfahren 100 zur optischen Inspektion der Behälter 2 aus der Figur 2 wie folgt eingesetzt:
Zunächst werden die Behälter 2 im Schritt 101 mit dem Transporteur 3 als Behältermassenstrom transportiert.

Dabei werden sie im Schritt 102 jeweils mit der optischen Inspektionseinheit 4 als erste Bilddaten erfasst. Denkbar ist, dass die Behälter 2 dabei einzeln oder gruppenweise erfasst werden.

Die ersten Bilddaten werden anschließend im Schritt 103 mit der Bildverarbeitungseinheit 5 auf die Verschmutzung und/oder Defekte D an dem jeweiligen Behälter 2 hin ausgewertet. Beispielsweise kommt dabei ein Bildverarbeitungsverfahren zum Einsatz, bei dem lokale Grauwertveränderungen in den Bilddaten erkannt und markiert werden. Über einen Schwellwert kann dann entschieden werden, ob der entsprechende Behälter 2 eine Verschmutzung bzw. einen Defekt D aufweist.

Allerdings ist es möglich, dass dabei die Verschmutzungsstelle V im Strahlengang der optischen Inspektionseinheit 4 fälschlicherweise als Verschmutzung und/oder als Defekt D klassifiziert wird. Dies führt dann zu einer ungewollten Fehlausleitung von an sich fehlerfreien Behältern. Folglich sollte möglichst frühzeitig erkannt werden, dass im Strahlengang der optischen Inspektionseinheit 4 die Verschmutzungsstelle V vorliegt.

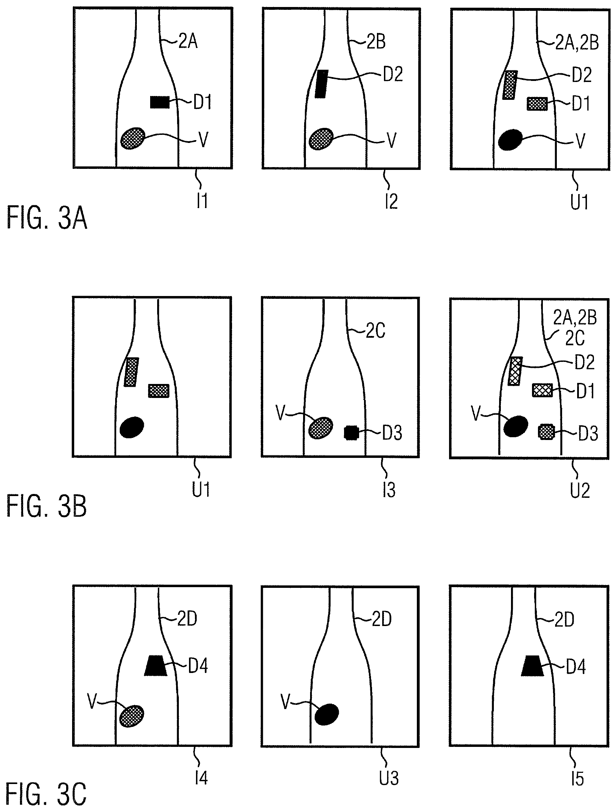

In der Figur 3A ist bespielhaft dargestellt, dass zur Erkennung der Verschmutzungsstelle V gemäß dem Schritt 108 die ersten Bilddaten I1, I2 mehrerer Behälter 2A, 2B zu einem Überlagerungsbild U1 überlagert werden.

In den ersten Bilddaten I1 des ersten Behälters 2A ist zu sehen, dass der erste Behälter 2A einen ersten Defekt D1 aufweist. Zudem wird die Verschmutzungsstelle V an der Beleuchtungseinrichtung 42 als lokal etwas verdunkelter Bildbereich abgebildet.

Des Weiteren ist in den ersten Bilddaten I2 des zweiten Behälters 2B zu sehen, dass er eine Verschmutzung D2 aufweist. Zudem ist auch in den ersten Bilddaten I2 die Verschmutzungsstelle V an der Beleuchtungseinrichtung 42 als lokal etwas verdunkelter Bereich zu sehen.

Bei der Überlagerung im Schritt 108 werden die beiden ersten Bilddaten I1, I2 zunächst auf einen Wertebereich von beispielsweise 0-255 normiert und dann zu dem Überlagerungsbild U1 überlagert. Vorzugsweise werden bei der Überlagerung die beiden ersten Bilddaten I1 und I2 addiert. Das Überlagerungsbild U1 kann dann ebenfalls wieder auf einen geeigneten Wertebereich, beispielsweise von ebenfalls von 0 bis 255 normiert werden. In dem Überlagerungsbild U1 ist zu sehen, dass sich die Behälter 2A, 2B überlagern und der Defekt D1 bzw. die Verschmutzung D2 abgeschwächt erscheint. Demgegenüber wird die Verschmutzungsstelle V verstärkt, so dass sie nun besser zu erkennen ist.

Anschließend wird das Überlagerungsbild U1 mit der Bildverarbeitungseinheit 5 gemäß Schritt 109 auf das Vorhandensein von Verschmutzungsstellen V hin ausgewertet. Dadurch, dass in dem Überlagerungsbild U1 die Verschmutzungen D2 und/oder Defekte D1 gegenüber der Verschmutzungsstelle V abgeschwächt sind, kann die Verschmutzungsstelle V im optischen Strahlengang der optischen Inspektionseinheit 4 besonders zuverlässig erkannt werden. Beispielsweise wird zur Erkennung der Verschmutzungsstelle V ein Bildverarbeitungsverfahren eingesetzt, mit dem lokal verdunkelte Bereich in dem Überlagerungsbild U1 erkannt werden.

In einem weiteren Schritt 104 werden weitere Behälter mit der optischen Inspektionseinheit als zweite Bilddaten die I3 bzw. I4 erfasst. Um nun die Verschmutzungsstelle V noch sicherer zu erkennen, wird aus den zweiten Bilddaten I3 eines dritten Behälters 2C ein weiteres Überlagerungsbild U2 gemäß Schritt 110 bestimmt. An dem Behälter 2C ist ein weiterer Defekt D3 sowie die Verschmutzungsstelle V im Strahlengang der optischen Inspektionseinheit 4 zu sehen.

Dies ist in der Figur 3B zu sehen: Dazu wird das im Schritt 108 bestimmte Überlagerungsbild U1 mit einem ersten Gewichtungsfaktor und die zweiten Bilddaten I3 mit einem zweiten Gewichtungsfaktor multipliziert und dann zu dem weiteren Überlagerungsbild U2 überlagert.

Beispielsweise wurden zur Bestimmung des Überlagerungsbilds U1 aus der Figur 3A die zwei Behälter 2A, 2B erfasst. Demnach berechnet sich der erste Gewichtungsfaktor aus der Anzahl der Behälter 2A, 2B dividiert die durch die um 1 erhöhte Anzahl der Behälter 2A, 2B, also in diesem Fall zu 2/3. Ferner berechnet sich der zweite Gewichtungsfaktor zu 1 dividiert durch die um 1 erhöhte Anzahl der Behälter 2A, 2B, also zu 1/3.

Besonders vorteilhaft sind also beide Gewichtungsfaktoren positiv, wobei der erste Gewichtungsfaktor größer als der zweite Gewichtungsfaktor ist, da im Überlagerungsbild U1 bereits die Information von mehreren Behälter 2A, 2B bzw. deren Bilddaten vorhanden ist. Demgegenüber wurde mit den zweiten Bilddaten I3 lediglich ein einzelner Behälter 2C erfasst, der nun zusätzlich in die überlagerte Information des weiteren Überlagerungsbilds U2 eingehen soll.

Das so überlagerte, weitere Überlagerungsbild U2 ist in der Figur 3B rechts zu sehen. Darin sind die Bildinformationen aus den zweiten Bilddaten D3 schwächer gewichtet als diejenigen des Überlagerungsbild U1. Zu sehen ist auch, dass in dem weiteren Überlagerungsbild U2 die Verschmutzungsstelle V gegenüber dem Überlagerungsbild U1 aus der Figur 3A noch weiter verstärkt abgebildet ist und so noch sicherer erkannt werden kann.

Das weitere Überlagerungsbild U2 kann nun das bisherige Überlagerungsbild U1 ersetzen und die Schritte 110 - 111 können iterativ mit den zweiten Bilddaten weiterer Behälter 2 wiederholt werden, wobei sich dann in wiederum weiteren Überlagerungsbildern die Verschmutzungsstelle V im Strahlengang der optischen Inspektionseinheit 4 immer stärker gegenüber den Verschmutzungen und/oder Defekten an den Behältern 2 durchsetzt.

Mit der Bildverarbeitungseinheit 5 wird im Schritt 111 das weitere Überlagerungsbild U2 auf das Vorhandensein von Verschmutzungsstellen V in dem Strahlengang der optischen Inspektionseinheit 4 hin ausgewertet. Dies geschieht analog zu Schritt 109. Ist nun eine Verschmutzungsstelle vorhanden, so wird nach der Entscheidung 112 im Schritt 113 zunächst die Schwellwertempfindlichkeit zur Auswertung der Verschmutzungen D2 und/oder Defekte D1, D3 an den Behältern 2 angepasst, sodass beispielsweise die Erkennung auf Basis der zweiten Bilddaten im Schritt 106 weniger empfindlich ist. Die Anpassung der Schwellwertempfindlichkeit kann auch nur in einem Teilbereich der Bilddaten I1 - I4 erfolgen, in dem die Verschmutzungsstelle V abgebildet wird.

Des Weiteren ist in der Figur 3C zu sehen, dass im Schritt 105 am Beispiel eines vierten Behälters 2D die Verschmutzungsstelle V mit dem weiteren Überlagerungsbild U2 aus den zweiten Bilddaten I4 herausgerechnet wird.

Dazu wird gemäß Schritt 104 ein weiterer Behälter 2 die mit der optischen Inspektionseinheit 4 als zweite Bilddaten I4 erfasst. Zu sehen ist, dass der Behälter 2D eine Verschmutzung D4 aufweist. Zu sehen ist auch, dass hier weiterhin die Verschmutzungsstelle V im Strahlengang der optischen Inspektionseinheit 4 als leichte, lokale Verdunklung abgebildet wird. Des Weiteren ist das wiederum weitere Überlagerungsbild U3 zu sehen, das aus einer größeren Vielzahl von Behältern 2 gemäß der Schritte 110 und 111 bestimmt wurde. Beispielsweise können dazu Bilddaten von 10, 100 oder noch mehr Behältern 2 überlagert werden. Dazu werden jeweils die zweiten Bilddaten eines wiederum weiteren Behälters 2 zu dem weiteren Überlagerungsbild U2 gemäß dem Schritt 110 überlagert und so das wiederum weitere Überlagerungsbild U3 berechnet. Folglich müssen immer nur das vorangegangene Überlagerungsbild U1, U2 im Speicher behalten werden und nicht die ersten bzw. zweiten Bilddaten einer großen Vielzahl von Behältern 2.

Zu sehen ist weiter Figur 3C, dass gemäß dem Schritt 105 mit dem wiederum weiteren Überlagerungsbild U3 die Verschmutzungsstelle V aus den zweiten Bilddaten I4 herausgerechnet werden. Beispielsweise wird das weitere Überlagerungsbild U3 mit einem dritten Gewichtungsfaktor multipliziert und dann von den zweiten Bilddaten I4 abgezogen. Zu sehen ist, dass als Ergebnis in den Bilddaten I5 die Verschmutzungsstelle V nicht mehr zu sehen ist, so dass die Verschmutzung D4 (bzw. auch ein Defekt) mit der Bildverarbeitungseinheit 5 im Schritt 106 besonders sicher erkannt werden kann. Dies geschieht im Schritt 106 entsprechend dem Schritt 103.

Falls nun die Verschmutzungsstelle V ein vorbestimmtes Verschmutzungsmaß überschreitet, so wird die optische Inspektionseinheit 4 im Schritt 114 gereinigt. Dazu kann ein manuelles oder automatisches Reinigungsverfahren dienen, beispielsweise bei dem die Lichtaustrittsscheibe 42a mit einem Reinigungsmittel abgeschwallt wird.

Die Behälter 2 können bei der Erfassung mit einer Vielzahl von in einem Raster angeordneten Lichtquellen der Beleuchtungseinrichtung 42 beleuchtet werden, beispielsweise mit einem Raster aus LEDs, wobei auf Basis des Überlagerungsbilds U1 wenigstens eine der Lichtquellen aktiviert wird, um die Verschmutzungsstellen V einer Bedienperson zur nachfolgenden Reinigung anzuzeigen, und wobei dabei die übrigen Lichtquellen der Beleuchtungseinrichtung 42 deaktiviert sind. Dies kann beispielsweise zwischen den Schritten 113 und 114 geschehen.

Alternativ können die Verschmutzungsstellen V der Bedienperson vor dem Schritt 114 an einem Bildschirm graphisch angezeigt werden, insbesondere das Überlagerungsbild U1 mit Markierungen der Verschmutzungsstellen.

Zudem werden die im Schritt 103 bzw. 106 als fehlerhaft erkannten Behälter 2 im Schritt 107 aus dem Behältermassenstrom ausgeschleust.

Dadurch, dass die Bilddaten I1, I2, I3 der Behälter 2A, 2B, 2C überlagert werden, wird das Bildsignal der Verschmutzungsstelle V im Überlagerungsbild U1 bzw. im weiteren Überlagerungsbild U2 verstärkt. Demgegenüber werden darin die Verschmutzungen D2 und/oder Defekte D1, D3 an den jeweiligen Behältern 2A, 2B, 2C abgeschwächt, da sie üblicherweise an verschiedenen Stellen in den Bilddaten I1, I2, I3 abgebildet werden. Selbst bei der Überlagerung von wenigen Bilddaten I1, I2 können die Verschmutzungsstellen V beispielsweise als abgedunkelter Bereich im Überlagerungsbild U1 erkannt werden. Dadurch, dass das Überlagerungsbild U1 bzw. das Überlagerungsbild U2 auf das Vorhandensein der Verschmutzungsstellen V in dem Strahlengang der optischen Inspektionseinheit 4 hin ausgewertet wird, können diese besonders zuverlässig erkannt werden und es können daraufhin geeignete Maßnahmen ausgelöst werden. Beispielsweise kann frühzeitig eine Bedienperson gewarnt werden, so dass sie die optische Inspektionseinheit 4 reinigt. Denkbar ist ein manuelles oder automatisches Reinigungsverfahren der Vorrichtung 1, insbesondere der Kamera 41 und/oder der Beleuchtungseinrichtung 42. Bei dem automatischen Reinigungsverfahren kann beispielsweise die Beleuchtungseinrichtung 42 mit einem Reinigungsfluid abgeschwallt werden. Vorzugsweise kann der Bedienperson bei Erreichen einer Eingriffsgrenze eine Warnmeldung angezeigt werden, beispielsweise auf einem Bildschirm. Zudem kann die Vorrichtung 1 und/oder eine der Vorrichtung 1 zugeordnete Behälterbehandlungsmaschine bei Erreichen der Eingriffsgrenze gestoppt werden. Mit der Vorrichtung 1 und dem Verfahren 100 können bereits leichte Verschmutzungsstellen V erkannt werden, so dass geeignete Maßnahmen besonders frühzeitig eingeleitet werden können und der reguläre Betrieb dazu nicht notwendigerweise unterbrochen werden muss. Beispielsweise kann eine Reinigung während einer Umrüstung einer der optischen Inspektionseinheit 4 zugeordneten Behälterbehandlungsmaschine geschehen.

Denkbar ist, dass vor dem Schritt 102 mit der optischen Inspektionseinheit 4 Testbilddaten ohne die Behälter 2 erfasst werden, wobei die Testbilddaten zu einem Testüberlagerungsbild überlagert werden, das dann auf bereits vorhandene Verschmutzungsstellen V in dem Strahlengang der optischen Inspektionseinheit 4 hin ausgewertet wird.

Es versteht sich, dass in den zuvor beschriebenen Ausführungsbeispielen genannte Merkmale nicht auf diese Merkmalskombinationen beschränkt sind, sondern auch einzeln oder in beliebigen anderen Kombinationen möglich sind.

## Patentansprüche

1. Verfahren (100) zur optischen Inspektion von Behältern (2), wobei die Behälter (2) mit einem Transporteur (3) als Behältermassenstrom transportiert werden (101), wobei die Behälter (2) mit einer optischen Inspektionseinheit (4) jeweils als erste Bilddaten (I1, I2) erfasst werden (102), und wobei die ersten Bilddaten (I1, I2) mit einer Bildverarbeitungseinheit (5) auf Verschmutzungen und/oder Defekte (D) an dem jeweiligen Behälter (2) hin ausgewertet werden (103),
**dadurch gekennzeichnet, dass**
die ersten Bilddaten (I1, I2) mehrerer Behälter (2A, 2B) zu einem Überlagerungsbild (U1) überlagert werden (108), und
dass das Überlagerungsbild (U1) auf ein Vorhandensein von Verschmutzungsstellen (V) in einem Strahlengang der optischen Inspektionseinheit (4) hin ausgewertet wird (109).

2. Verfahren (100) nach Anspruch 1, wobei ein weiterer Behälter (2C) mit der optischen Inspektionseinheit (4) als zweite Bilddaten (I3, I4) erfasst wird (104), wobei das Überlagerungsbild (U1) mit einem ersten Gewichtungsfaktor und die zweiten Bilddaten (I3, I4) mit einem zweiten Gewichtungsfaktor multipliziert und dann zu einem weiteren Überlagerungsbild (U2) überlagert werden (110), und wobei das weitere Überlagerungsbild (U2) auf das Vorhandensein von Verschmutzungsstellen (V) in dem Strahlengang der optischen Inspektionseinheit (4) hin ausgewertet wird (111).

3. Verfahren (100) nach Anspruch 2, wobei der Betrag des ersten Gewichtungsfaktor größer als der Betrag des zweiten Gewichtungsfaktor ist.

4. Verfahren (100) nach Anspruch 2 oder 3, wobei der erste Gewichtungsfaktor und der zweite Gewichtungsfaktor in einem Bereich zwischen 0 und 1 liegen, und wobei sich der erste Gewichtungsfaktor und der zweite Gewichtungsfaktor zu 1 addieren.

5. Verfahren (100) nach einem der Ansprüche 2 - 4, wobei sich der erste Gewichtungsfaktor aus der Anzahl der mehren Behälter (2A, 2B) dividiert durch die um Eins erhöhte Anzahl der mehreren Behälter (2A, 2B) berechnet, und wobei sich der zweite Gewichtungsfaktor aus Eins dividiert durch die um Eins erhöhte Anzahl der mehreren Behälter (2A, 2B) berechnet.

6. Verfahren (100) nach einem der Ansprüche 1 - 5, wobei die ersten Bilddaten (I1, I2), das Überlagerungsbild (U1), die zweiten Bilddaten (I3, I4) und/oder das weitere Überlagerungsbild (U2) jeweils bildweise auf denselben Wertebereich normiert werden, insbesondere auf einen Wertebereich von 0 bis 255 oder von 0 - 65535.

7. Verfahren (100) nach einem der Ansprüche 1 - 6, wobei ein weiterer Behälter (2D) mit der optischen Inspektionseinheit (4) als zweite Bilddaten (I3, I4) erfasst wird, und wobei das Überlagerungsbild (U1) und/oder das weitere Überlagerungsbild (U2) mit einem dritten Gewichtungsfaktor multipliziert und von den zweiten Bilddaten (I3, I4) abgezogen wird, um die Verschmutzungsstellen (V) in den Strahlengang der optischen Inspektionseinheit (4) aus den zweiten Bilddaten (I3, I4) herauszurechnen.

8. Verfahren (100) nach einem der Ansprüche 1 - 7, wobei falls in dem Überlagerungsbild (U1) oder in dem weiteren Überlagerungsbild (U2) Verschmutzungsstellen (V) im Strahlengang der optischen Inspektionseinheit (V) vorhanden sind (112), eine Schwellwertempfindlichkeit zur Auswertung der Verschmutzungen und/oder Defekte (D) an den Behältern (2) angepasst, insbesondere herabgesetzt wird (113).

9. Verfahren (100) nach einem der Ansprüche 1 - 8, wobei fehlerhafte Behälter (2A, 2B, 2C) nach der Auswertung der Verschmutzungen und/oder der Defekte (D) aus dem Behältermassenstrom ausgeschleust werden (107).

10. Verfahren (100) nach einem der Ansprüche 1 - 9, wobei vor der Erfassung der Behälter (2) mit der optischen Inspektionseinheit (4) Testbilddaten ohne Behälter erfasst werden, und wobei die Testbilddaten zu einem Testüberlagerungsbild überlagert werden, das dann auf bereits vorhandene Verschmutzungsstellen (V) in dem Strahlengang der optischen Inspektionseinheit (4) hin ausgewertet wird.

11. Verfahren (100) nach einem der Ansprüche 1 - 10, wobei die Behälter (2) bei der Erfassung mit einer Vielzahl von Lichtquellen einer Beleuchtungseinrichtung (42) beleuchtet werden, und wobei auf Basis des Überlagerungsbilds (U1) wenigstens eine der Lichtquellen aktiviert wird, um die Verschmutzungsstellen einer Bedienperson zur nachfolgenden Reinigung anzuzeigen, und wobei dabei die übrigen Lichtquellen der Beleuchtungseinrichtung (42) deaktiviert sind.

12. Vorrichtung (1) zur optischen Inspektion von Behältern (2), insbesondere zur Durchführung des Verfahrens (100) nach einem der Ansprüche 1 - 11, mit
- einem Transporteur (3) zum Transport der Behälter (2) als Behältermassenstrom,
- einer optischen Inspektionseinheit (4), um die Behälter (2) als erste Bilddaten (I1, I2) zu erfassen,
- mit einer Bildverarbeitungseinheit (5), um die ersten Bilddaten (I1, I2) auf Verschmutzungen und/oder Defekte (D) an den Behältern hin auszuwerten,
**dadurch gekennzeichnet, dass**
die Bildverarbeitungseinheit (5) dazu ausgebildet ist, die ersten Bilddaten (I1, I2) mehrerer Behälter (2A, 2B) zu einem Überlagerungsbild (U1) zu überlagern und das Überlagerungsbild (U1) auf ein Vorhandensein von Verschmutzungsstellen (V) in einem Strahlengang der optischen Inspektionseinheit (4) hin auszuwerten.

13. Vorrichtung (1) nach Anspruch 12, wobei die optische Inspektionseinheit (4) eine Beleuchtungseinrichtung (42) zur Beleuchtung der Behälter (2) und/oder eine Kamera (41) zur Erfassung der Behälter (2) als Bilddaten (I1 - I4) umfasst.

14. Vorrichtung (1) nach Anspruch 12 oder 13, wobei die Vorrichtung (1) eine Ausschleuseinrichtung umfasst, um fehlerhafte Behälter (2A, 2B, 2C) nach der Auswertung der Verschmutzungen und/oder Defekte (D) aus dem Behältermassenstrom auszuschleusen.

## Claims

1. Method (100) for optically inspecting containers (2), wherein the containers (2) are transported (101) as a container mass flow by means of a carrier (3), wherein the containers (2) are each detected (102) by an optical inspection unit (4) as first image data (11, I2), and wherein the first image data (I1, I2) are evaluated (103) by an image processing unit (5) for contamination and/or defects (D) on the respective container (2), **characterized in that**
the first image data (I1, I2) of a plurality of containers (2A, 2B) are superimposed (108) to form a superimposed image (U1), and
the superimposed image (U1) is evaluated (109) for the presence of contamination sites (V) in a beam path of the optical inspection unit (4).

2. Method (100) according to claim 1, wherein a further container (2C) is detected (104) with the optical inspection unit (4) as second image data (I3, I4), wherein the superimposed image (U1) is multiplied by a first weighting factor and the second image data (I3, I4) are multiplied by a second weighting factor and then superimposed (110) to form a further superimposed image (U2), and wherein the further superimposed image (U2) is evaluated (111) for the presence of contamination spots (V) in the beam path of the optical inspection unit (4).

3. Method (100) according to claim 2, wherein the magnitude of the first weighting factor is greater than the magnitude of the second weighting factor.

4. Method (100) according to claim 2 or 3, wherein the first weighting factor and the second weighting factor lie in a range between 0 and 1, and wherein the first weighting factor and the second weighting factor add up to 1.

5. Method (100) according to one of claims 2 to 4, wherein the first weighting factor is calculated from the number of the multiple containers (2A, 2B) divided by the number of the multiple containers (2A, 2B) increased by one, and wherein the second weighting factor is calculated from one divided by the number of the multiple containers (2A, 2B) increased by one. (2A, 2B) increased by one.

6. Method (100) according to one of claims 1-5, wherein the first image data (I1, I2), the superimposed image (U1), the second image data (I3, I4) and/or the further superimposed image (U2) are each normalized image by image to the same value range, in particular to a value range from 0 to 255 or from 0 to 65535.

7. Method (100) according to one of claims 1-6, wherein a further container (2D) is captured with the optical inspection unit (4) as second image data (I3, I4), and wherein the superimposed image (U1) and/or the further superimposed image (U2) is multiplied by a third weighting factor and subtracted from the second image data (I3, I4) in order to calculate the contamination sites (V) in the beam path of the optical inspection unit (4) from the second image data (I3, I4).

8. Method (100) according to one of claims 1-7, wherein if contamination sites (V) are present in the beam path of the optical inspection unit (V) in the superimposed image (U1) or in the further superimposed image (U2) (112), a threshold sensitivity for evaluating the contamination and/or defects (D) on the containers (2) is adapted, in particular reduced (113).

9. Method (100) according to one of claims 1-8, wherein defective containers (2A, 2B, 2C) are ejected (107) from the container mass flow after evaluation of the contamination and/or defects (D).

10. Method (100) according to one of claims 1-9, wherein, prior to detecting the containers (2) with the optical inspection unit (4), test image data is detected without containers, and wherein the test image data is superimposed to form a test superimposed image, which is then evaluated for existing contamination sites (V) in the beam path of the optical inspection unit (4).

11. Method (100) according to one of claims 1-10, wherein the containers (2) are illuminated during detection by a plurality of light sources of an illumination device (42), and wherein, on the basis of the superimposed image (U1), at least one of the light sources is activated in order to indicate the contamination sites to an operator for subsequent cleaning, and wherein the remaining light sources of the illumination device (42) are deactivated.

12. Device (1) for the optical inspection of containers (2), in particular for carrying out the method (100) according to one of claims 1 to 11, with
- a carrier (3) for transporting the containers (2) as a container mass flow,
- an optical inspection unit (4) for detecting the containers (2) as first image data (I1, I2),
- with an image processing unit (5) for evaluating the first image data (I1, I2) for contamination and/or defects (D) on the containers,
**characterized in that**
the image processing unit (5) is designed to superimpose the first image data (I1, I2) of several containers (2A, 2B) to form a superimposed image (U1) and to evaluate the superimposed image (U1) for the presence of contamination sites (V) in a beam path of the optical inspection unit (4).

13. Device (1) according to claim 12, wherein the optical inspection unit (4) comprises an illumination device (42) for illuminating the containers (2) and/or a camera (41) for detecting the containers (2) as image data (I1 - I4).

14. Device (1) according to claim 12 or 13, wherein the device (1) comprises an ejection device for ejecting defective containers (2A, 2B, 2C) from the container mass flow after the contamination and/or defects (D) have been evaluated.

## Revendications

1. Procédé (100) pour l'inspection optique de récipients (2), dans lequel les récipients (2) sont transportés (101) par un convoyeur (3) sous la forme d'un flux massique de récipients, dans lequel les récipients (2) sont détectés (102) par une unité d'inspection optique (4) comme des premières données d'image (I1, I2) respectives, et dans lequel les premières données d'image (I1, I2) sont évaluées (103) par une unité de traitement d'image (5) pour détecter les contaminations et/ou les défauts (D) sur le récipient (2) respectif,
**caractérisé en ce que**
les premières données d'image (I1, I2) de plusieurs récipients (2A, 2B) sont superposées (108) pour former une image en superposition (U1), et
l'image en superposition (U1) est évaluée (109) pour déterminer la présence de points de contamination (V) dans un trajet de faisceau de l'unité d'inspection optique (4).

2. Procédé (100) selon la revendication 1, dans lequel un autre récipient (2C) est détecté (104) par l'unité d'inspection optique (4) en tant que deuxièmes données d'image (I3, I4), dans lequel l'image en superposition (U1) est multipliée par un premier facteur de pondération et les deuxièmes données d'image (I3, I4) sont multipliées par un deuxième facteur de pondération puis superposées (110) pour former une autre image en superposition (U2), et dans lequel l'autre image en superposition (U2) est évaluée (111) pour déterminer la présence de points de contamination (V) dans le trajet du faisceau de l'unité d'inspection optique (4).

3. Procédé (100) selon la revendication 2, dans lequel la grandeur du premier facteur de pondération est supérieure à la grandeur du deuxième facteur de pondération.

4. Procédé (100) selon la revendication 2 ou 3, dans lequel le premier facteur de pondération et le deuxième facteur de pondération sont compris dans une plage de 0 à 1, et dans lequel la somme du premier facteur de pondération et du deuxième facteur de pondération égale 1.

5. Procédé (100) selon l'une des revendications 2 à 4, dans lequel le premier facteur de pondération est calculé comme étant le nombre de la pluralité de récipients (2A, 2B) divisé par le nombre de la pluralité de récipients (2A, 2B) augmenté de un, et dans lequel le deuxième facteur de pondération est calculé comme étant un divisé par le nombre de la pluralité de récipients (2A, 2B) augmenté de un.

6. Procédé (100) selon l'une des revendications 1 à 5, dans lequel les premières données d'image (I1, I2), l'image en superposition (U1), les deuxièmes données d'image (I3, 14) et/ou l'autre image en superposition (U2) sont normalisées respectivement image par image dans la même plage de valeurs, en particulier dans une plage de valeurs de 0 à 255 ou de 0 à 65 535.

7. Procédé (100) selon l'une des revendications 1 à 6, dans lequel un autre récipient (2D) est détecté par l'unité d'inspection optique (4) en tant que deuxièmes données d'image (I3, I4), et dans lequel l'image en superposition (U1) et/ou l'autre image en superposition (U2) sont multipliées par un troisième facteur de pondération et soustraites des deuxièmes données d'image (I3, I4) afin de calculer les points de contamination (V) dans le trajet du faisceau de l'unité d'inspection optique (4) à partir des deuxièmes données d'image (I3, I4).

8. Procédé (100) selon l'une des revendications 1 à 7, dans lequel, si des points de contamination (V) sont présents (112) dans le trajet du faisceau de l'unité d'inspection optique (V) sur l'image en superposition (U1) ou sur l'autre image en superposition (U2), une sensibilité seuil pour l'évaluation des contaminations et/ou des défauts (D) sur les récipients (2) est adaptée, et en particulier réduite (113).

9. Procédé (100) selon l'une des revendications 1 à 8, dans lequel les récipients défectueux (2A, 2B, 2C) sont retirés du flux massique de récipients (107) après l'évaluation des contaminations et/ou des défauts (D).

10. Procédé (100) selon l'une des revendications 1 à 9, dans lequel des données d'image d'essai sans récipients sont détectées avant la détection des récipients (2) par l'unité d'inspection optique (4), et dans lequel les données d'image d'essai sont superposées pour former une image en superposition d'essai, qui est ensuite évaluée pour déterminer des points de contamination (V) existants dans le trajet de faisceau de l'unité d'inspection optique (4).

11. Procédé (100) selon l'une des revendications 1 à 10, dans lequel, pendant la détection, les récipients (2) sont éclairés par une pluralité de sources de lumière d'un dispositif d'éclairage (42), et dans lequel, sur la base de l'image en superposition (U1), au moins l'une des sources de lumière est activée afin d'indiquer les points de contamination à un opérateur pour un nettoyage ultérieur, et dans lequel les sources de lumière restantes du dispositif d'éclairage (42) sont conjointement désactivées.

12. Dispositif (1) pour l'inspection optique de récipients (2), en particulier pour la mise en œuvre du procédé (100) selon l'une des revendications 1 à 11, comprenant
- un convoyeur (3) pour transporter les récipients (2) sous la forme d'un flux massique de récipients,
- une unité d'inspection optique (4) pour détecter les récipients (2) comme premières données d'image (I1, I2),
- une unité de traitement d'image (5) pour évaluer les premières données d'image (I1, I2) afin de déterminer des contaminations et/ou des défauts (D) sur les récipients,
**caractérisé en ce que**
l'unité de traitement d'image (5) est conçue pour superposer les premières données d'image (I1, I2) d'une pluralité de récipients (2A, 2B) afin de former une image en superposition (U1), et pour évaluer l'image en superposition (U1) afin de déterminer la présence de points de contamination (V) dans un trajet de faisceau de l'unité d'inspection optique (4).

13. Dispositif (1) selon la revendication 12, dans lequel l'unité d'inspection optique (4) comprend un dispositif d'éclairage (42) pour éclairer les récipients (2) et/ou une caméra (41) pour détecter les récipients (2) sous forme de données d'image (I1 à I4).

14. Dispositif (1) selon la revendication 12 ou 13, dans lequel le dispositif (1) comprend un dispositif d'évacuation pour évacuer les récipients défectueux (2A, 2B, 2C) du flux massique de récipients après l'évaluation des contaminations et/ou des défauts (D).
